# EUROPÄISCHE PATENTSCHRIFT

(11) **EP 3 321 227 B1**
(45) Veröffentlichungstag und Bekanntmachung des Hinweises auf die Patenterteilung: **11.09.2019**
(21) Anmeldenummer: 17198037.8
(22) Anmeldetag: 24.10.2017
(51) Int. Cl.: B66F 9/075

(54) **FLURFÖRDERZEUG MIT EINER AUTOMATISCH KOPPELBAREN FUNKFERNBEDIENUNG SOWIE EIN VERFAHREN ZUM AUTOMATISCHEN KOPPELN EINER FUNKFERNBEDIENUNG MIT EINEM FLURFÖRDERZEUG**
INDUSTRIAL TRUCK WITH AN AUTOMATICALLY COUPLING RADIO REMOTE CONTROL AND A METHOD FOR AUTOMATICALLY COUPLING A RADIO REMOTE CONTROL WITH AN INDUSTRIAL TRUCK
CHARIOT DE MANUTENTION MUNI D'UNE RADIO COMMANDÉE À DISTANCE AUTOMATIQUE POUVANT ÊTRE COUPLÉE AINSI QUE PROCÉDÉ DE COUPLAGE AUTOMATIQUE D'UNE RADIO COMMANDÉE À DISTANCE AVEC UN CHARIOT DE MANUTENTION

(30) Priorität: 10.11.2016 DE 102016121505
(43) Veröffentlichungstag der Anmeldung: 16.05.2018
(73) Patentinhaber: Jungheinrich Aktiengesellschaft, 22047 Hamburg (DE)
(72) Erfinder: Göpner, Oliver, 23845 Oering (DE)
(74) Vertreter: Hauck Patentanwaltspartnerschaft mbB

(56) Entgegenhaltungen:
- EP-A2- 1 829 813
- US-A- 4 849 735
- US-A1- 2010 114 405
- US-A1- 2014 343 758

## Beschreibung

Die Erfindung betrifft ein System aus einem Flurförderzeug mit einer mit dem Flurförderzeug automatisch koppelbaren Funkfernbedienung sowie ein Verfahren zum automatischen Koppeln eines Flurförderzeugs mit einer Funkfernbedienung.

Moderne Flurförderzeuge können über eine Funkfernbedienung ferngesteuert werden. So kann beispielsweise eine Fernsteuerung der Fahrfunktionen des Flurförderzeugs erfolgen, aber auch weitere Funktionen wie beispielsweise Hub- und Senkfunktionen eines Hubmastes mitsamt seinem Lastteil können fernbedienbar ausgestaltet sein. Auch können Kommissionierfahrzeuge durch eine Funkfernbedienung derart ferngesteuert werden, dass sie einer Bedienperson folgen.

Bevor eine Fernsteuerung solcher Flurförderzeuge erfolgen kann, muss eine Kopplung der entsprechenden Funkfernbedienung mit dem Flurförderzeug erfolgen. Hierfür kann beispielsweise bei einer erstmaligen Einrichtung eine dauerhaft fixierte Kopplung zwischen Flurförderzeug und Funkfernbedienung hergestellt werden. Eine solche fixierte Verbindung hat jedoch den Nachteil, dass die jeweilige Funkfernbedienung lediglich für genau ein Flurförderzeug verwendbar ist. Auch ist es bekannt, eine Funkfernbedienung durch die Eingabe eines die Funkfernbedienung identifizierenden Codes an dem Flurförderzeug mit diesem zu koppeln oder eine Kopplung über Kurzstreckenfunktechnologie, wie beispielsweise einen an dem Flurförderzeug angebrachten NFC-Chip, aufzubauen. Beide Varianten sind jedoch relativ aufwendig und es können Bedienfehler auftreten.

Aus CN 105 101 467 A ist ein Verfahren zur automatischen Kopplung von Gerätschaften bekannt, das auf einer Auswertung der Signalintensität basiert.

Hierbei sendet ein kabelloses Steuergerät eine Kopplungsanfrage an ein zu koppelndes Gerät, wobei das zu koppelnde Gerät nur dann antwortet, wenn die Signalintensität der Kopplungsanfrage einen gewissen Grenzwert überschreitet. Dieses Verfahren ist jedoch recht ungenau, insbesondere kann es so zu ungewollten Kopplungen kommen. Zudem läuft dieses Verfahren nicht vollständig automatisch ab.

Aus US 2015/0296329 A1 ist ein Verfahren zur Kopplung kabelloser Kommunikationssysteme bekannt, wobei ein zu koppelndes Gerät nach Bluetooth-Signalen anderer kopplungsbereiter Geräte sucht und auf Befehl einer Bedienperson, beispielsweise durch einen Knopfdruck, eine Kopplung auslöst. Auch dieses Verfahren ist aufwendig und fehleranfällig. Auch dieses Verfahren läuft nicht vollständig automatisch ab.

Aus US 2014/0343758 A1 ist ein Flurförderzeug mit einer unterstützenden Fernbedienung gemäß dem Oberbegriff des Anspruchs 1 bekannt geworden. Das Fernbedienungssystem weist einen Empfänger auf, um Daten von einem drahtlosem Empfänger zu empfangen und weiterzuleiten.

Der Erfindung liegt die Aufgabe zugrunde, ein System aus einem Flurförderzeug und einer Funkfernbedienung sowie ein Verfahren zum Koppeln eines Flurförderzeugs mit einer Funkfernbedienung bereitzustellen, wobei die Kopplung in besonders einfacher und zuverlässiger Weise vollständig automatisch geschieht.

Die Aufgabe wird gelöst durch ein System aus einem Flurförderzeug und einer mit dem Flurförderzeug automatisch koppelbaren Funkfernbedienung gemäß Anspruch 1 sowie durch ein Verfahren zum automatischen Koppeln eines Flurförderzeugs mit einer Funkfernbedienung gemäß Anspruch 7. Vorteilhafte Ausgestaltungen sind Gegenstand der Unteransprüche, der Beschreibung sowie der Figuren.

Das erfindungsgemäße System besteht aus einem Flurförderzeug und einer mit dem Flurförderzeug automatisch koppelbaren Funkfernbedienung, wobei
- mindestens drei Sende- und Empfangseinheiten in einer vorbestimmten räumlichen Anordnung zueinander an dem Flurförderzeug angeordnet sind, die dazu ausgebildet sind, Suchsignale auszusenden und Antwortsignale zu empfangen,
- die Funkfernbedienung dazu ausgebildet ist, die von den Sende- und Empfangseinheiten ausgesandten Suchsignale zu empfangen, zu verarbeiten und korrespondierende Antwortsignale auszusenden,
- eine dem Flurförderzeug zugeordnete Auswerteeinheit vorgesehen ist, die dazu ausgebildet ist, Signallaufzeiten der ausgesandten Suchsignale und der empfangenen, korrespondierenden Antwortsignale zu ermitteln und aus mindestens drei der ermittelten Signallaufzeiten eine Position der Funkfernbedienung relativ zu dem Flurförderzeug zu bestimmen, und
- eine Steuereinheit vorgesehen ist, die dazu ausgebildet ist, die Funkfernbedienung mit dem Flurförderzeug zu koppeln, wenn die relative Position der Funkfernbedienung innerhalb eines vorbestimmten Raumbereichs liegt.

Das erfindungsgemäße Verfahren zum automatischen Koppeln eines Flurförderzeugs mit einer Funkfernbedienung umfasst die Schritte:
- Aussenden von Suchsignalen durch mindestens drei Sende- und Empfangseinheiten des Flurförderzeugs,
- Empfang und Verarbeitung der Suchsignale durch die Funkfernbedienung,
- Aussenden von zu den Suchsignalen korrespondierenden Antwortsignalen durch die Funkfernbedienung,
- Ermitteln von Signallaufzeiten der ausgesandten Suchsignale und der empfangenen, korrespondierenden Antwortsignale durch eine Auswerteeinheit des Flurförderzeugs,
- Bestimmen einer relativen Position der Funkfernbedienung gegenüber dem Flurförderzeug aus mindestens drei der ermittelten Signallaufzeiten, und
- Koppeln der Funkfernbedienung mit dem Flurförderzeug, wenn die relative Position der Funkfernbedienung innerhalb eines vorbestimmten Raumbereichs liegt.

Erfindungsgemäß umfasst das Flurförderzeug mindestens drei an diesem, insbesondere an einem Antriebsteil des Flurförderzeugs, angeordnete Sende- und Empfangseinheiten. Die mindestens drei Sende- und Empfangseinheiten befinden sich dabei an vorbestimmten Positionen eines fahrzeugfesten Koordinatensystems, so dass die Koordinaten jeder der Sende- und Empfangseinheiten in dem fahrzeugfesten Koordinatensystem bekannt sind. Beispielsweise können das fahrzeugfeste Koordinatensystem und die Positionen der mindestens drei Sende- und Empfangseinheiten innerhalb dieses Koordinatensystems in der Steuereinheit gespeichert sein. Das fahrzeugfeste Koordinatensystem kann beispielsweise zweidimensional oder dreidimensional sein. Die Sende- und Empfangseinheiten können sich beispielsweise innerhalb einer gemeinsamen Ebene befinden oder in drei Dimensionen angeordnet sein. Die Sende- und Empfangseinheiten sind dazu ausgebildet, Signale auszusenden und zu empfangen. So können die Sende- und Empfangseinheiten Suchsignale aussenden, um in der Umgebung des Flurförderzeugs nach Funkfernbedienungen zu suchen. Beispielsweise kann es sich bei den Suchsignalen um eine Kopplungsanfrage handeln. Auch können die Suchsignale jeweils eine Kennzeichnung tragen, welche die jeweilige Sende- und Empfangseinheit eindeutig kennzeichnen. Die Steuereinheit kann dazu ausgebildet sein, die mindestens drei Sende- und Empfangseinheiten zum Aussenden der Suchsignale anzusteuern.

Funkfernbedienungen, die dazu ausgebildet sind, mit einem solchen Flurförderzeug gekoppelt zu werden, können die von den Sende- und Empfangseinheiten ausgesandten Suchsignale empfangen. Die Funkfernbedienung ist zudem dazu ausgebildet, die empfangenen Suchsignale zu verarbeiten und Antwortsignale auszusenden, die zu den von der Funkfernbedienung empfangenen Suchsignalen korrespondieren. Unter Verarbeiten kann hierbei insbesondere das Erzeugen von solchen korrespondierenden Antwortsignalen verstanden werden. Ein von der Funkfernbedienung ausgesandtes Antwortsignal kann beispielsweise eine Kopplungsbestätigung sein. Auch kann das Antwortsignal eine die jeweilige Funkfernbedienung identifizierende Kennzeichnung, beispielsweise eine Identifikationsnummer, enthalten. Weiterhin kann auch das Antwortsignal eine Kennzeichnung enthalten, welche die Sende- und Empfangseinheit eindeutig identifiziert, welche das korrespondierende Suchsignal abgeschickt hat. Die Funkfernbedienung ist also dazu ausgebildet, für jedes der empfangenen Suchsignale ein spezifisches Antwortsignal zu generieren. Die Funkfernbedienung kann beispielsweise als ein tragbares Handgerät oder als ein Handschuh ausgebildet sein und durch eine Bedienperson getragen oder angezogen werden.

Die von der Funkfernbedienung in Antwort auf die Suchsignale ausgesandten Antwortsignale werden wiederum von den mindestens drei Sende- und Empfangseinheiten des Flurförderzeugs empfangen, wobei insbesondere jede der Sende- und Empfangseinheiten das für sie bestimmte, also das zu ihrem Suchsignal korrespondierende, Antwortsignal empfängt. Eine Auswerteeinheit des Flurförderzeugs ermittelt daraufhin die Signallaufzeiten der von der jeweiligen Sende- und Empfangseinheit zu der Funkfernbedienung laufenden Suchsignale und der von der Funkfernbedienung zu der jeweiligen Sende- und Empfangseinheit zurücklaufenden Antwortsignale. Auch kann die Auswerteeinheit dabei eine interne Verarbeitungszeit der Funkfernbedienung zur Verarbeitung der Suchsignale berücksichtigen. Da das jeweilige Antwortsignal zu dem jeweiligen Suchsignal korrespondiert, also beispielsweise eine Kennung der jeweiligen Sende- und Empfangseinheit trägt, kann jedes Antwortsignal eindeutig der richtigen Sende- und Empfangseinheit zugeordnet werden. Die Auswerteeinheit ermittelt dann für jede der mindestens drei Sende- und Empfangseinheiten die entsprechende Laufzeit. Es werden folglich mindestens drei Signallaufzeiten ermittelt. Aus den mindestens drei ermittelten Signallaufzeiten bestimmt die Auswerteeinheit mittels rechnerischer Verfahren, wie beispielsweise der Trilateration, dann die Entfernung jeder der mindestens drei Sende- und Empfangseinheiten zu der Funkfernbedienung. Hieraus folgt die Position der Funkfernbedienung relativ zu dem Flurförderzeug. Insbesondere wird so also die Position der Funkfernbedienung in dem fahrzeugfesten Koordinatensystem bestimmt. Es kann dabei die Position in zwei oder drei Koordinaten, also in einer Ebene oder im dreidimensionalen Raum, ermittelt werden. Es können also die X-, Y- und Z-Koordinaten der Funkfernbedienung in Bezug auf das fahrzeugfeste Koordinatensystem bestimmt werden. Zu einer zuverlässigen Bestimmung der Position im dreidimensionalen Raum kann dabei insbesondere mindestens eine weitere Sende- und Empfangseinheit vorgesehen sein.

Eine Kopplung der Funkfernbedienung mit dem Flurförderzeug erfolgt dabei erfindungsgemäß nur dann, wenn die relative Position der Funkfernbedienung gegenüber dem Flurförderzeug innerhalb eines vorbestimmten Raumbereichs liegt. Dieser vorbestimmte Raumbereich kann grundsätzlich ein beliebiger Raumbereich sein. Insbesondere kann der vorbestimmte Raumbereich in der Nähe des oder innerhalb des Flurförderzeugs, beispielsweise im Bereich einer Standplattform des Flurförderzeugs, liegen. Der vorbestimmte Raumbereich kann durch Koordinaten in dem fahrzeugfesten Koordinatensystem definiert sein, wobei diese Koordinaten beispielsweise in der Steuereinheit gespeichert sein können. Die Steuereinheit koppelt die Funkfernbedienung nur dann mit dem Flurförderzeug, wenn deren Position innerhalb des vorbestimmten Raumbereichs liegt. Sollte das jeweilige Suchsignal eine Kopplungsanfrage umfassen und das jeweilige, korrespondierende Antwortsignal um eine Kopplungsbestätigung umfassen, so kann eine Kopplung unmittelbar zustande kommen sobald die Funkfernbedienung in den vorbestimmten Bereich eintritt. Auch kann vorgesehen sein, dass die Steuereinheit ein separates Kopplungssignal an die Funkfernbedienung versendet, sobald diese den vorbestimmten Bereich betritt. Das Flurförderzeug kann insbesondere ein fahrzeugfestes Funkmodul aufweisen, welches mit der Funkfernbedienung gekoppelt wird. Das Funkmodul kann beispielsweise das erwähnte Kopplungssignal versenden. Auch kann das Funkmodul zum Empfang von durch eine gekoppelte Funkfernbedienung ausgesandten Bedienbefehlen ausgebildet sein. Die Auswerteeinheit kann in die Steuereinheit integriert sein. Weiterhin kann vorgesehen sein, dass eine Kopplung nur erfolgt, wenn nicht bereits eine Funkfernbedienung mit dem Flurförderzeug gekoppelt ist. Insbesondere kann vorgesehen sein, dass die Sende- und Empfangseinheiten nur dann Suchsignale aussenden, wenn nicht bereits eine Kopplung zu einer Funkfernbedienung besteht. Somit kann verhindert werden, dass sich mehr als eine Funkfernbedienung gleichzeitig mit einem Flurförderzeug koppelt.

Das erfindungsgemäße System sowie Verfahren ermöglicht somit eine automatische Kopplung einer Funkfernbedienung mit einem Flurförderzeug völlig ohne Zutun einer Bedienperson. Eine die Funkfernbedienung tragende Bedienperson muss lediglich den vorbestimmten Raumbereich betreten, um eine Kopplung zwischen Funkfernbedienung und Flurförderzeug auszulösen. Diese Art der Kopplung ist zum einen besonders einfach und schnell realisierbar und zum anderen kann kein menschenbedingter Fehler auftreten, da die Kopplung vollständig automatisch abläuft. Das Flurförderzeug kann dabei insbesondere mit mehreren Funkfernbedienung über den Austausch der beschriebenen Signale in Kontakt stehen, wobei nur eine in dem vorbestimmten Raumbereich befindliche oder eintretende Funkfernbedienung gekoppelt wird. Durch die mindestens drei Sende- und Empfangseinheiten kann die tatsächliche Position der Funkfernbedienung sehr genau bestimmt werden, sodass es nicht zu versehentlichen Kopplungen mit nur in der Nähe des vorbestimmten Raumbereichs befindlichen Funkfernbedienungen kommt. Unter Kopplung ist insbesondere eine 1:1-Verbindung, also eine exklusive Verbindung, zwischen Funkfernbedienung und Flurförderzeug zu verstehen. Diese kann beispielsweise durch den Austausch von Hardwareadressen zustande kommen.

Nach einer bevorzugten Ausgestaltung weist das Flurförderzeug eine Standplattform auf und die Steuereinheit ist weiterhin dazu ausgebildet, eine auf der Standplattform befindliche Bedienperson zu erkennen. Die Steuereinheit koppelt dann die Funkfernbedienung mit dem Flurförderzeug nur, wenn sie eine Bedienperson auf der Standplattform erkennt. Es kann somit als weitere Kopplungsbedingung also eine Überwachung der Standplattform des Flurförderzeugs auf die Anwesenheit einer Bedienperson erfolgen. Auch wenn die Funkfernbedienung sich innerhalb des vorbestimmten Raumbereichs befinden sollte, erfolgt also in diesem Fall noch keine Kopplung, sofern nicht auch eine Bedienperson auf der Standplattform erkannt wird. Zur Erkennung einer Bedienperson auf der Standplattform kann insbesondere ein Totmannknopf oder -Pedal dienen. Bevorzugt umfasst der vorbestimmte Raumbereich die Standplattform, so dass sich also die Bedienperson mitsamt der Fernbedienung auf die Standplattform stellen muss, um eine Kopplung einzuleiten. Somit kann sichergestellt werden, dass die Fernbedienung auch tatsächlich mit dem gewünschten Flurförderzeug koppelt. Es kann sich bei der Standplattform grundsätzlich auch um einen Bedienersitz oder ähnliches handeln. Es kann vorgesehen sein, dass die mindestens drei Sende- und Empfangseinheiten nur dann Suchsignale aussenden, wenn eine Bedienperson auf der Standplattform steht.

Nach einer weiteren Ausgestaltung weist das Flurförderzeug eine Anzeigeeinheit auf. Die Anzeigeeinheit kann dabei einen Hinweis anzeigen, wenn das Flurförderzeug mehr als eine Funkfernbedienung innerhalb des vorbestimmten Raumbereichs erkennt. Es erfolgt dann zunächst keine Kopplung zwischen Flurförderzeug und einer Funkfernbedienung, wenn die relative Position mehrerer Funkfernbedienungen innerhalb des vorbestimmten Raumbereichs liegt. Alternativ oder zusätzlich zu der Anzeigeeinheit des Flurförderzeugs kann auch die Funkfernbedienung eine Anzeigeeinheit umfassen. Auch die der Funkfernbedienung zugeordnete Anzeigeeinheit kann dann dazu ausgebildet sein, einen Hinweis auszugeben, wenn die relative Position mehrerer Funkfernbedienungen innerhalb des vorbestimmten Raumbereichs liegt. Des Weiteren kann über die Anzeigeeinheit des Flurförderzeugs und/oder der Funkfernbedienung eine Information darüber ausgegeben werden, ob eine Bedienperson auf einer eventuell vorgesehenen Standplattform steht. Auch kann vorgesehen sein, dass die Anzeigeeinheit des Flurförderzeugs und/oder der Funkfernbedienung eine erfolgreiche Kopplung der Funkfernbedienung mit dem Flurförderzeug über die Anzeigeeinheit darstellen. Die Anzeigeeinheiten können die genannten Hinweise dabei beispielsweise optisch, akustisch und/oder haptisch ausgeben.

Die Erfindung wird im Folgenden anhand von Figuren erläutert. Soweit nichts anderes angegeben ist, bezeichnen gleiche Bezugszeichen gleiche Gegenstände. Es zeigen:
- Fig. 1: ein Kommissionierfahrzeug sowie eine mit diesem koppelbare Funkfernbedienung in einer schematischen Ansicht von oben und
- Fig. 2: ein Schema einer Ausgestaltung des Verfahrens zur Kopplung eines Flurförderzeugs mit einer Funkfernbedienung.

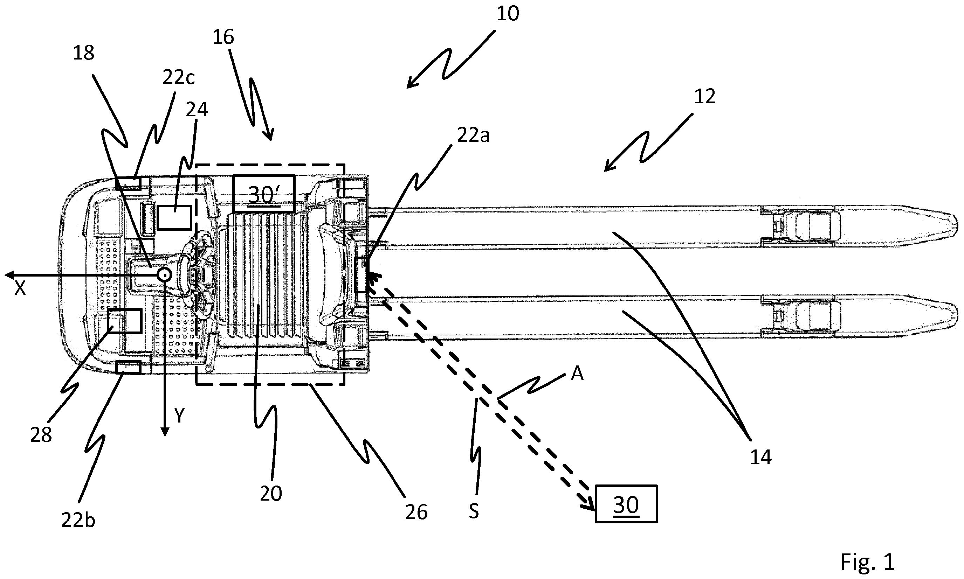

Figur 1 zeigt ein Flurförderzeug 10 in einer Ansicht von oben. Das Flurförderzeug 10 umfasst ein Lastteil 12 mit zwei Lastgabeln 14, die zur Aufnahme von Paletten zum Kommissionieren von Waren ausgebildet sind. Weiterhin umfasst das Flurförderzeug 10 einen Antriebsteil 16 mit einer Kurzdeichsel 18 sowie einer Standplattform 20. Eine auf der Standplattform 20 stehende Bedienperson kann über die Kurzdeichsel 18 das Flurförderzeug 10 führen.

Das Antriebsteil 16 verfügt über drei Sende- und Empfangseinheiten 22a, 22b, 22c, deren Positionen in einem fahrzeugfesten Koordinatensystem definiert sind. Das fahrzeugfeste Koordinatensystem sowie die Positionen der drei Sende- und Empfangseinheiten 22a, 22b, 22c können dabei in der Steuereinheit 24 des Flurförderzeugs 10 gespeichert sein. Das fahrzeugfeste Koordinatensystem hat drei zueinander senkrecht stehende Achsen X, Y und Z, wobei die Z-Achse in Figur 1 in die Ebene hineinragt. In dem fahrzeugfesten Koordinatensystem ist ein vorbestimmter Raumbereich 26 definiert, der in dem vorliegenden Ausführungsbeispiel im Bereich der Standplattform 20 liegt. Zudem sind in Fig. 1 zwei schematisch dargestellte Funkfernbedienungen 30, 30' ersichtlich, von denen eine innerhalb des vorbestimmten Raumbereichs 26 und eine außerhalb des vorbestimmten Raumbereichs 26 befindlich ist. Weiterhin ist ein Funkmodul 28 dem Antriebsteil 16 zugeordnet.

Die drei Sende- und Empfangseinheiten 22a, 22b, 22c senden Suchsignale aus, die von den Funkfernbedienungen 30, 30' empfangen und verarbeitet werden. Die Funkfernbedienungen 30, 30' senden daraufhin korrespondierende Antwortsignale aus, die wiederum von den jeweiligen Sende- und Empfangseinheiten 22a, 22b, 22c empfangen werden. Aus Gründen der Übersichtlichkeit sind in Figur 1 nur ein von der Sende- und Empfangseinheit 22a an die Funkfernbedienung 30 ausgesandtes Suchsignal S und ein von dieser Funkfernbedienung 30 an die Sende- und Empfangseinheit 22a zurückgesandtes Antwortsignal A dargestellt. Das Antwortsignal A korrespondiert zu dem Suchsignal S derart, dass für die Sende- und Empfangseinheit 22a eindeutig erkennbar ist, dass es sich um das zu ihrem Suchsignal gehörende Antwortsignal handelt.

Aus den Hin- und Rücklaufzeiten der jeweiligen Such- und Antwortsignale kann die Entfernung der Funkfernbedienung 30, 30' zu jeder der drei Sende- und Empfangseinheiten 22a, 22b, 22c bestimmt werden. Da die Positionen der drei Sende- und Empfangseinheiten 22a, 22b, 22c in dem fahrzeugfesten Koordinatensystem definiert sind, kann hierüber auf die Position der Funkfernbedienungen 30, 30' innerhalb des fahrzeugfesten Koordinatensystems geschlossen werden. Die Positionsbestimmung erfolgt hierbei durch eine in die Steuereinheit 24 integrierte Auswerteeinheit. Die Steuereinheit 24 stellt somit fest, dass die Funkfernbedienung 30 außerhalb des vorbestimmten Raumbereichs 26 liegt, so dass keine Kopplung der Funkfernbedienung 30 mit dem Funkmodul 28 des Flurförderzeugs 10 erfolgt. Die Funkfernbedienung 30' hingegen befindet sich innerhalb des vorbestimmten Raumbereichs 26, sodass eine Kopplung der Funkfernbedienung 30' mit dem Funkmodul 28 erfolgt. Die Steuereinheit 24 kann hierfür beispielsweise das Funkmodul 28 zum Aussenden eines Kopplungssignals an die Funkfernbedienung 30' ansteuern. Auch könnte eine solche Kopplungsanfrage bereits Teil der von den Sende- und Empfangseinheiten 22a, 22b, 22c ausgesandten Suchsignalen sein. Als weitere Kopplungsbedingung kann zudem vorgesehen sein, dass eine Bedienperson auf der Standplattform 20 befindlich ist. Die Bedienperson kann beispielsweise über ein an der Bedienplattform 20 angeordnetes Totmannpedal ihre Anwesenheit bekunden. Die Steuereinheit 24 lässt eine Kopplung in diesem Fall nur dann zu, wenn eine Bedienperson auf der Standplattform 20 erkannt wird und sich zudem eine Funkfernbedienung innerhalb des vorbestimmten Raumbereichs 26 befindet.

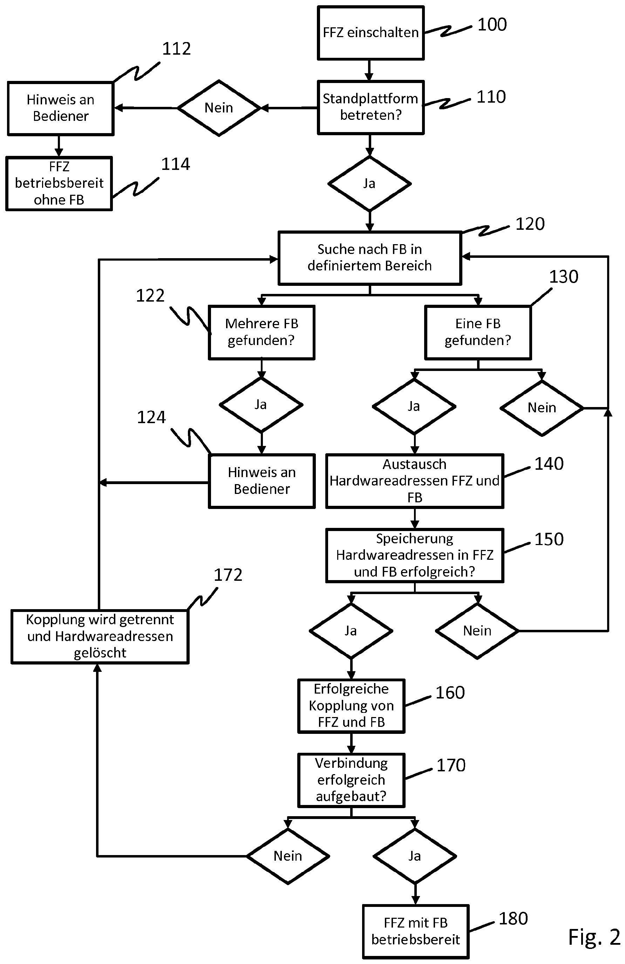

In Figur 2 ist eine Ausgestaltung des Verfahrens mittels eines Flussdiagramms dargestellt. Das Verfahren beginnt mit dem Einschalten des Flurförderzeugs ("FFZ einschalten", Schritt 100). Anschließend prüft das Flurförderzeug, ob eine Bedienperson die Standplattform betreten hat ("Standplattform betreten?", Schritt 110). Wie erläutert, kann dies beispielsweise über eine Auswertung des von einem Totmannpedal erzeugten Signals durch die Steuereinheit erfolgen. Sollte keine Bedienperson die Standplattform betreten haben, so folgt ein entsprechender Hinweis an die Bedienperson ("Hinweis an Bediener", Schritt 112). Das Flurförderzeug ist anschließend ohne gekoppelte Funkfernbedienung betriebsbereit ("FFZ betriebsbereit ohne FB", Schritt 114). Sollte hingegen eine Bedienperson die Standplattform betreten haben, so wird eine Suche nach Funkfernbedienungen gestartet, die sich innerhalb des vorbestimmten Raumbereichs befinden ("Suche nach FB in definiertem Bereich", Schritt 120). Entsprechend senden also die mindestens drei Sende- und Empfangseinheiten Suchsignale aus.

Sollten nun mehrere Funkfernbedienungen innerhalb des vorbestimmten Raumbereichs gefunden werden ("mehrere FB gefunden?", Schritt 122), so erfolgt ein Hinweis an die Bedienperson ("Hinweis an Bediener", Schritt 124). Anschließend folgt wieder Schritt 120. Sollte genau eine Funkfernbedienung innerhalb des vorbestimmten Raumbereichs gefunden werden ("eine FB gefunden?", Schritt 130), so erfolgt eine Kopplung der entsprechenden Funkfernbedienung mit dem Flurförderzeug durch einen Austausch der Hardwareadressen von Flurförderzeug und Funkfernbedienung ("Austausch Hardwareadressen FFZ und FB", Schritt 140). Sollte keinerlei Funkfernbedienung gefunden werden, so wird weitergesucht, Schritt 120. Eine Funkfernbedienung gilt dann als gefunden, wenn die Auswertung der Signallaufzeiten ergibt, dass sich die Funkfernbedienung innerhalb des vorbestimmten Raumbereichs befindet. Nach der Kopplung, also dem Austausch der Hardwareadressen gemäß Schritt 140, wird die Hardwareadresse der Funkfernbedienung in dem Flurförderzeug und die Hardwareadresse des Flurförderzeugs in der Funkfernbedienung gespeichert ("Speicherung Hardwareadressen in FFZ und FB erfolgreich?", Schritt 150). Sollte diese Speicherung nicht erfolgreich sein, so folgt wiederum Schritt 120. Ist die Speicherung der Hardwareadressen erfolgreich, so gilt die Kopplung zwischen Flurförderzeug und Fernbedienung ebenfalls als erfolgreich ("erfolgreiche Kopplung von FFZ und FB", Schritt 160).

Anschließend wird versucht, eine Funkverbindung zwischen dem Funkmodul des Flurförderzeugs und der gekoppelten Funkfernbedienung aufzubauen ("Verbindung erfolgreich aufgebaut?", Schritt 170). Sollte der Verbindungsaufbau erfolgreich sein, so ist das Flurförderzeug mit gekoppelter Funkfernbedienung betriebsbereit ("Flurförderzeug mit FB betriebsbereit", Schritt 180). Sollte der Verbindungsaufbau nicht erfolgreich sein, so wird die Kopplung getrennt und die Hardwareadressen werden gelöscht ("Kopplung wird getrennt und Hardwareadressen gelöscht", Schritt 172), wobei anschließend wiederum Schritt 120 folgt.

## Patentansprüche

1. System aus einem Flurförderzeug (10) und einer mit dem Flurförderzeug automatisch koppelbaren Funkfernbedienung (30, 30'), **dadurch gekennzeichnet, dass**
- mindestens drei Sende- und Empfangseinheiten (22a, 22b, 22c) in einer vorbestimmten räumlichen Anordnung zueinander an dem Flurförderzeug (10) angeordnet sind, die dazu ausgebildet sind, Suchsignale (S) auszusenden und Antwortsignale (A) zu empfangen,
- die Funkfernbedienung (30, 30') dazu ausgebildet ist, die von den Sende- und Empfangseinheiten (22a, 22b, 22c) ausgesandten Suchsignale (S) zu empfangen, zu verarbeiten und korrespondierende Antwortsignale (A) auszusenden,
- eine dem Flurförderzeug (10) zugeordnete Auswerteeinheit vorgesehen ist, die dazu ausgebildet ist, Signallaufzeiten der ausgesandten Suchsignale (S) und der empfangenen, korrespondierenden Antwortsignale (A) zu ermitteln und aus mindestens drei der ermittelten Signallaufzeiten eine Position der Funkfernbedienung (30, 30') relativ zu dem Flurförderzeug zu bestimmen, und
- eine Steuereinheit (24) vorgesehen ist, die dazu ausgebildet ist, die Funkfernbedienung (30,30') mit dem Flurförderzeug (10) zu koppeln, wenn die relative Position der Funkfernbedienung (30, 30') innerhalb eines vorbestimmten Raumbereichs liegt.

2. System nach Anspruch 1, **dadurch gekennzeichnet, dass** zwischen der gekoppelten Funkfernbedienung (30, 30') und dem Flurförderzeug (10) eine exklusive 1:1-Verbindung besteht.

3. System nach Anspruch 1 oder 2, **dadurch gekennzeichnet, dass** das Flurförderzeug (10) ein fahrzeugfestes Funkmodul zur Kopplung mit der Funkfernbedienung (30, 30') aufweist.

4. System nach einem der Ansprüche 1 bis 3, **dadurch gekennzeichnet, dass** das Flurförderzeug (10) eine Standplattform (20) aufweist und dass die Steuereinheit (24) weiterhin dazu ausgebildet ist, eine auf der Standplattform (20) befindliche Bedienperson zu erkennen und das Flurförderzeug (10) mit der Funkfernbedienung (30, 30') zu koppeln, wenn die Steuereinheit (24) eine Bedienperson auf der Standplattform (20) erkennt.

5. System nach einem der vorhergehenden Ansprüche, **dadurch gekennzeichnet, dass** eine dem Flurförderzeug (10) und/oder der Funkfernbedienung (30, 30') zugeordnete Anzeigeeinheit vorgesehen ist.

6. System nach Anspruch 5, **dadurch gekennzeichnet, dass** die Steuereinheit (24) weiterhin dazu ausgebildet ist, über die Anzeigeeinheit einen Hinweis auszugeben, wenn die relative Position mehrerer Funkfernbedienungen (30, 30') innerhalb des vorbestimmten Raumbereichs relativ zu dem Flurförderzeug (10) liegt.

7. System nach Anspruch 4 und 6, **dadurch gekennzeichnet, dass** die Steuereinheit weiterhin dazu ausgebildet ist, über die Anzeigeeinheit einen Hinweis auszugeben, wenn keine Bedienperson auf der Standplattform steht.

8. Verfahren zum automatischen Koppeln eines Flurförderzeugs (10) mit einer Funkfernbedienung (30, 30') umfassend die Schritte:
- Aussenden von Suchsignalen (S) durch mindestens drei Sende- und Empfangseinheiten (22a, 22b, 22c) des Flurförderzeugs,
- Empfang und Verarbeitung der Suchsignale (S) durch die Funkfernbedienung (30, 30'),
- Aussenden von zu den Suchsignalen (S) korrespondierenden Antwortsignalen (A) durch die Funkfernbedienung (30, 30'),
- Ermitteln von Signallaufzeiten der ausgesandten Suchsignale (S) und der empfangenen, korrespondierenden Antwortsignale (A) durch eine Auswerteeinheit des Flurförderzeugs (10),
- Bestimmen einer relativen Position der Funkfernbedienung (30, 30') gegenüber dem Flurförderzeug (10) aus mindestens drei der ermittelten Signallaufzeiten, und
- Koppeln der Funkfernbedienung (30, 30') mit dem Flurförderzeug (10), wenn die relative Position der Funkfernbedienung (30, 30') innerhalb eines vorbestimmten Raumbereichs liegt.

9. Verfahren nach Anspruch 8, **dadurch gekennzeichnet, dass** durch das Koppeln eine exklusive 1:1 -Verbindung hergestellt wird.

10. Verfahren nach Anspruch 8 oder 9, **gekennzeichnet durch** die weiteren Schritte: Überwachung einer Standplattform (20) des Flurförderzeugs (10) auf die Anwesenheit einer Bedienperson und Koppeln des Flurförderzeugs (10) mit der Funkfernbedienung (30, 30'), wenn eine Bedienperson auf der Standplattform (20) erkannt wird.

11. Verfahren nach einem der Ansprüche 8 bis 10, **dadurch gekennzeichnet, dass** einer Bedienperson eine erfolgreiche Kopplung der Funkfernbedienung (30, 30') mit dem Flurförderzeug (10) optisch und/oder akustisch und/oder haptisch mitgeteilt wird.

12. Verfahren nach einem der Ansprüche 8 bis 11, **gekennzeichnet durch** den Schritt: Anzeigen eines Hinweises durch eine Anzeigeeinheit des Flurförderzeugs (10), wenn das Flurförderzeug (10) mehr als eine Funkfernbedienung (30, 30') innerhalb des vorbestimmten Raumbereichs erkennt.

## Claims

1. System comprising an industrial truck (10) and a radio remote control (30, 30') which can be automatically coupled to the industrial truck, **characterized in that**
- at least three transmitting and receiving units (22a, 22b, 22c) are arranged in a predetermined spatial arrangement relative to one another on the industrial truck (10), which are designed to transmit search signals (S) and to receive response signals (A),
- the radio remote control (30, 30') is configured to receive and process the search signals (S) transmitted by the transmitting and receiving units (22a, 22b, 22c) and to transmit corresponding response signals (A),
- an evaluation unit is provided which is assigned to the industrial truck (10) and is designed to determine signal transit times of the transmitted search signals (S) and of the received, corresponding response signals (A) and to determine a position of the radio remote control (30, 30') relative to the industrial truck from at least three of the determined signal transit times, and
- a control unit (24) is provided which is designed to couple the radio remote control (30, 30') to the industrial truck (10) when the relative position of the radio remote control (30, 30') is within a predetermined spatial range.

2. System according to claim 1, **characterized in that** an exclusive 1:1 connection exists between the coupled radio remote control (30, 30') and the industrial truck (10).

3. System according to claim 1 or 2, **characterized in that** the industrial truck (10) has a radio module fixed to the vehicle for coupling to the radio remote control (30, 30').

4. System according to any one of claims 1 to 3, **characterized in that** the industrial truck (10) has a standing platform (20) and **in that** the control unit (24) is further designed to detect an operator located on the standing platform (20) and to couple the industrial truck (10) to the radio remote control (30, 30') when the control unit (24) detects an operator on the standing platform (20).

5. System according to one of the preceding claims, **characterized in that** a display unit assigned to the industrial truck (10) and/or the radio remote control (30, 30') is provided.

6. System according to claim 5, **characterized in that** the control unit (24) is further adapted to output an indication via the display unit when the relative position of a plurality of radio remote controls (30, 30') is within the predetermined spatial range relative to the industrial truck (10).

7. System according to claim 4 and 6, **characterized in that** the control unit is further adapted to output an indication via the display unit when no operator is standing on the standing platform.

8. Method for automatically coupling an industrial truck (10) to a radio remote control (30, 30') comprising the following steps:
- transmission of search signals (S) by at least three transmitting and receiving units (22a, 22b, 22c) of the industrial truck,
- reception and processing of the search signals (S) by the radio remote control (30, 30'),
- transmission of response signals (A) corresponding to the search signals (S) by the radio remote control (30, 30'),
- determination of signal transit times of the transmitted search signals (S) and of the received, corresponding response signals (A) by an evaluation unit of the industrial truck (10),
- determination of a relative position of the radio remote control (30, 30') relative to the industrial truck (10) from at least three of the determined signal transit times, and
- coupling the radio remote control (30, 30') to the industrial truck (10) when the relative position of the radio remote control (30, 30') is within a predetermined spatial range.

9. Method according to claim 8, **characterized in that** an exclusive 1:1 connection is established by the coupling.

10. Method according to claim 8 or 9, **characterized by** the further steps: Monitoring a standing platform (20) of the industrial truck (10) for the presence of an operator and coupling the industrial truck (10) to the radio remote control (30, 30') when an operator is detected on the standing platform (20).

11. Method according to one of claims 8 to 10, **characterized in that** an operator is informed optically and/or acoustically and/or haptically of a successful coupling of the radio remote control (30, 30') with the industrial truck (10).

12. Method according to one of claims 8 to 11, **characterized by** the step of: Displaying an indication by means of a display unit of the industrial truck (10) when the industrial truck (10) detects more than one radio remote control (30, 30') within the predetermined spatial range.

## Revendications

1. Système constitué d'un chariot de manutention (10) et d'une télécommande radio (30, 30') pouvant être couplée automatiquement au chariot de manutention, **caractérisé en ce**
- **qu'**au moins trois unités d'émission et de réception (22a, 22b, 22c) sont disposées dans un agencement spatial prédéfini les unes par rapport aux autres sur le chariot de manutention (10), qui sont conçues pour émettre des signaux de recherche (S) et recevoir des signaux de réponse (A),
- **que** la télécommande radio (30, 30') est conçue de manière à recevoir les signaux de recherche (S) envoyés par les unités d'émission et de réception (22a, 22b, 22c), à les traiter et à diffuser les signaux de réponse (A) correspondants,
- **qu'**une unité d'analyse associée au chariot de manutention (10) est prévue, qui est conçue de manière à évaluer les temps de propagation de signaux des signaux de recherche (S) émis et des signaux de réponse (A) correspondants reçus et à déterminer une position de la télécommande radio (30, 30') par rapport au chariot de manutention à partir d'au moins trois temps de propagation de signaux évalués, et
- **qu'**une unité de commande (24) est prévue, qui est conçue de manière à coupler la télécommande radio (30, 30') au chariot de manutention (10), lorsque la position relative de la télécommande radio (30, 30') se situe à l'intérieur d'une zone spatiale prédéfinie.

2. Système selon la revendication 1, **caractérisé en ce qu'**il existe une connexion 1:1 exclusive entre la télécommande radio (30, 30') couplée et le chariot de manutention (10).

3. Système selon la revendication 1 ou 2, **caractérisé en ce que** le chariot de manutention (10) présente un module radio solidaire du véhicule servant au couplage à la télécommande radio (30, 30').

4. Système selon l'une des revendications 1 à 3, **caractérisé en ce que** le chariot de manutention (10) présente une plate-forme porteuse (20) et que l'unité de commande (24) est conçue en outre de manière à identifier un opérateur se trouvant sur la plate-forme porteuse (20) et à coupler le chariot de manutention (10) à la télécommande radio (30, 30'), lorsque l'unité de commande (24) détecte un opérateur sur la plate-forme porteuse (20).

5. Système selon l'une des revendications précédentes, **caractérisé en ce qu'**il est prévu une unité d'affichage associée au chariot de manutention (10) et/ou à la télécommande radio (30, 30').

6. Système selon la revendication 5, **caractérisé en ce que** l'unité de commande (24) est conçue en outre de manière à donner une indication via l'unité d'affichage, lorsque la position relative de plusieurs télécommandes radio (30, 30') se situe à l'intérieur de la zone spatiale prédéfinie par rapport au chariot de manutention (10).

7. Système selon la revendication 4 et 6, **caractérisé en ce que** l'unité de commande est conçue en outre de manière à donner une indication via l'unité d'affichage, lorsqu'aucun opérateur ne séjourne sur la plate-forme porteuse.

8. Procédé de couplage automatique d'un chariot de manutention (10) à une télécommande radio (30, 30'), comprenant les étapes suivantes :
- l'émission de signaux de recherche (S) par au moins trois unités d'émission et de réception (22a, 22b, 22c) du chariot de manutention,
- la réception et le traitement des signaux de recherche (S) par la télécommande radio (30, 30'),
- l'émission des signaux de réponse (A) correspondant aux signaux de recherche (S) par la télécommande radio (30, 30'),
- l'évaluation des temps de propagation de signaux des signaux de recherche (S) émis et des signaux de réponse (A) correspondants reçus par une unité d'analyse du chariot de manutention (10),
- la détermination d'une position relative de la télécommande radio (30, 30') par rapport au chariot de manutention (10) à partir d'au moins trois temps de propagation de signaux évalués, et
- le couplage de la télécommande radio (30, 30') au chariot de manutention (10), lorsque la position relative de la télécommande radio (30, 30') se situe à l'intérieur d'une zone spatiale prédéfinie.

9. Procédé selon la revendication 8, **caractérisé en ce qu'**une connexion 1:1 exclusive est établie par le couplage.

10. Procédé selon la revendication 8 ou 9, **caractérisé par** les autres étapes suivantes : la surveillance d'une plate-forme porteuse (20) du chariot de manutention (10) quant à la présence d'un opérateur et le couplage du chariot de manutention (10) à la télécommande radio (30, 30'), lorsqu'un opérateur est identifié sur la plate-forme porteuse (20).

11. Procédé selon l'une des revendications 8 à 10, **caractérisé en ce qu'**un couplage réussi de la télécommande radio (30, 30') au chariot de manutention (10) est signalé à un opérateur par voie optique et/ou acoustique et/ou haptique.

12. Procédé selon l'une des revendications 8 à 11, **caractérisé par** l'étape suivante : la visualisation d'une indication par une unité d'affichage du chariot de manutention (10), lorsque le chariot de manutention (10) détecte plus d'une télécommande radio (30, 30') à l'intérieur de la zone spatiale prédéfinie.
